# EUROPÄISCHE PATENTANMELDUNG

(11) **EP 1 158 233 A2**
(43) Veröffentlichungstag der Anmeldung: **28.11.2001**
(21) Anmeldenummer: 01111172.1
(22) Anmeldetag: 11.05.2001
(51) Int. Cl.: F16L 3/10

(54) **Schelle zur Befestigung von Schlauch-oder Rohrleitungen**

(30) Priorität: 11.05.2000 DE 10023126
(71) Anmelder: HYDAC Befestigungstechnik GmbH, 66125 Saarbrücken-Dudweiler (DE)
(72) Erfinder: Even, Rainer, Dipl.-Ing., 66123 Saarbrücken (DE)
(74) Vertreter: Patentanwälte Bartels und Partner

(57) **Zusammenfassung**

1. Schelle zur Befestigung von Schlauch- oder Rohrleitungen.
2. Die Erfindung betrifft eine Schelle zur Befestigung von Schlauch- oder Rohrleitungen, mit zwei an einem Träger (27) festzulegenden Klemmteilen, von denen jedes einen gewölbten Backenteil (21,21'), der mit dem Umfang der zu befestigenden Leitung zusammenwirkt, und einen flachen, sich vom Backenteil (21,21') erstreckenden Befestigungsteil (23) aufweist, die zum Schließen der Schelle gegeneinander bewegbar sind, wobei die Backenteile (21,21') an ihrem einen freien Ende eine Sicherungsanordnung gegen gegenseitiges Verdrehen und/oder eine Gelenkstelle zum Öffnen und Schließen der Schelle aufweisen. Dadurch, daß an zumindest einem Klemmteil zumindest eine aus der Ebene seines Befestigungsteils (23) vorspringende Nase (29) ausgebildet ist, die unter Bildung einer Verdrehsicherung den Träger (27) seitlich übergreift oder in eine hierfür vorgesehene Ausnehmung eines Trägers (27) eingreift, ist eine kostengünstige Schellenkonstruktion erreichbar, die nichts desto weniger aber eine sichere Verankerung der betreffenden Leitungen, insbesondere an massiv ausgebildeten Trägern, ermöglicht.

## Beschreibung

Die Erfindung betrifft eine Schelle zur Befestigung von Schlauch- oder Rohrleitungen, mit zwei an einem Träger festzulegenden Klemmteilen, von denen jedes einen gewölbten Backenteil, der mit dem Umfang der zu befestigenden Leitung zusammenwirkt, und einen flachen, sich vom Backenteil erstreckenden Befestigungsteil aufweist, die zum Schließen der Schelle gegeneinander bewegbar sind, wobei die Backenteile an ihrem einen freien Ende eine Sicherungsanordnung gegen gegenseitiges Verdrehen und/oder eine Gelenkstelle zum Öffnen und Schließen der Schelle aufweisen.

Schellen dieser Art finden in der Technik für die Verankerung von Leitungen verschiedenster Art weit verbreitete Anwendung. Namentlich werden solche Schellen mit aus Stahlblech geformten Klemmteilen für die Befestigung von Hydraulikleitungen bei Baggern eingesetzt. Um die betriebssichere Verankerung der betreffenden Leitungen herzustellen, muß darauf geachtet werden, daß die Klemmteile an ihren Befestigungsteilen so miteinander verspannt werden, daß ein Verdrehen der Klemmteile relativ zueinander, was zu einer Schwenkbewegung der Backenteile gegenüber der Achse der aufgenommenen Leitung führen würde, sicher vermieden ist. Zu diesem Zweck sieht man üblicherweise mehr als eine Klemmschraube vor, die die Befestigungsteile der Klemmteile durchgreifen, um die Klemmteile gegeneinander zu spannen und gegebenenfalls die Schelle an einem Träger zu befestigen.

Durch die DE 33 12 865 A1 ist eine Schelle zum Befestigen eines Wellrohres bekannt. Bei dieser bekannten Schelle zum Befestigen eines Wellrohres mit einem das Wellrohr übergreifenden, zumindest über einen Teil eines Kreises gebogenen Abschnitt und wenigstens am einen Ende dieses Abschnitts einen etwa tangential zum Wellrohr nach außen abgewinkelten Abschnitt mit einem Loch zur Durchführung eines Befestigungsbolzens weist der das Wellrohr übergreifende Abschnitt der Schelle radial nach innen ragende, zwischen die Wellungen des Wellrohres einführbare Vorsprünge auf, um eine Axialverschiebung des Wellrohres relativ zur Schelle zu verhindern. Ferner weist der tangential zum Wellrohr abgewinkelte Abschnitt spitze Vorsprünge zur Drehsicherung der Schelle auf, indem die Vorsprünge in der Art von Krampen in den Träger, an dem die Schelle festgelegt werden soll, eingreifen. Ferner weist die bekannte Schelle nur ein Klemmteil auf, so daß das Wellrohr auf einer Unterlage, beispielsweise in Form des Trägers selbst, zu sichern ist; andernfalls wäre nicht auszuschließen, daß das Wellrohr außer Eingriff mit dem gewölbten Backenteil des einzigen Schellenklemmteils gelangt. Des weiteren sind zum Herstellen der Krampenverbindung hohe Eingriffskräfte notwendig, die über eine Festlegeschraube für das einzige Klemmteil aufzubringen sind. Ferner setzt die Krampenverbindung über die spitzen Vorsprünge zur Drehsicherung der Schelle voraus, daß der Werkstoff des Trägers relativ weich, beispielsweise in Form eines Holzwerkstoffes, ausgebildet ist, um den dahingehenden Eingriff und das Festlegen überhaupt erst zu ermöglichen. Das sichere Festlegen der bekannten Schelle an Stahlträgerteilen od. dgl. ist mithin nicht möglich.

Durch das deutsche Gebrauchsmuster 17 06 079 ist eine zweiteilige Rohrschelle bekannt, wobei beide Teile einerseits mittels Schraube und Mutter, andererseits durch ihre ineinandergreifenden Enden miteinander verbunden sind. Für die zuletzt genannte Sicherungsanordnung gegen gegenseitiges Verdrehen der beiden Backenteile weist das eine Ende des Klemmteils eine oder mehrere Aussparungen auf, in die eine oder mehrere Vorsprünge des einen Endes des anderen Klemmteils eingreifen. Dahingehende Rohrschellen dienen insbesondere zur Befestigung von Bandrollen an deren Traggerüsten und sofern sie an einem feststehenden Träger montiert werden, würden sie sich beim Festlegevorgang automatisch in ihrer Position zu dem Träger verändern, was den Montagevorgang mit der bekannten Schelle deutlich erschwert.

Ausgehend von diesem Stand der Technik liegt der Erfindung die Aufgabe zugrunde, die bekannten Schellenkonstruktionen in der Art weiter zu verbessern, daß sie kostengünstiger herstellbar sind, nichts desto weniger aber eine sichere Verankerung der betreffenden Leitung gewährleisten, sowie eine sichere Aufnahme dieser Leitungen innerhalb der Schelle. Eine dahingehende Aufgabe löst eine Schelle mit den Merkmalen des Patentanspruches 1 in seiner Gesamtheit.

Dadurch, daß gemäß dem kennzeichnenden Teil des Patentanspruches 1 an zumindest einem Klemmteil zumindest eine aus der Ebene seines Befestigungsteils vorspringende Nase ausgebildet ist, die unter Bildung einer Verdrehsicherung den Träger seitlich übergreift oder in eine hierfür vorgesehene Ausnehmung dieses Trägers eingreift, ist eine sichere Verdrehsicherung erreicht, wobei, sofern der Träger an die entsprechenden Geometrien der jeweils vorspringenden Nase angepaßt ist, sich mit geringem Kraftaufwand und zielgerichtet die Schelle über ihre Klemmteile festlegen läßt. Da die jeweilige Nase den Träger übergreift oder formschlüssig in eine Ausnehmung des Trägers eingreift, ist darüber hinaus sichergestellt, daß das flache, sich vom Backenteil weg erstreckende Befestigungsteil in ebene Anlage mit der Oberseite des Trägers kommt, so daß eine paßgenaue Verbindung von Schelle mit Träger erreicht ist. Letzteres spielt insbesondere dann eine Rolle, wenn starre Leitungen mit mehreren derartigen Schellen über eine längere Wegstrecke an korrespondierenden Trägern festzulegen sind, wo Ungenauigkeiten den Leitungsverlauf beeinträchtigenden könnten.

Die Befestigungsteile der Klemmteile werden mit nur einer einzigen Klemmschraube gespannt und derart am Träger festgelegt. Da nur eine einzige Schraube benötigt wird und in den Befestigungsteilen der Klemmteile nur eine einzige Bohrung ausgebildet werden muß, ergibt sich gleichfalls der Vorteil der verringerten Herstellungskosten, ohne daß eine Einbuße an Betriebssicherheit hingenommen werden müßte, weil die erforderliche Verdrehsicherheit durch die Formschlußverbindung mit dem Träger der Schelle über die jeweilige Nase gewährleistet ist.

Die die Verdrehsicherung bildende, aus der Ebene des betreffenden Befestigungsteils vorspringende Nase läßt sich auf einfache Weise durch Verformen einer vorzugsweise randseitig gelegenen Werkstoffpartie ausbilden, indem beispielsweise ein Prägevorgang durchgeführt wird. Bei Ausführungsbeispielen, bei denen das Befestigungsteil einen rechteckförmigen oder quadratischen Grundriß besitzt, ist vorzugsweise je eine an jedem Eckbereich ausgeformte Nase vorgesehen, so daß, wenn als Träger der Schelle ein passender, quaderförmiger Montageplatz vorgesehen ist, dieser an zwei gegenüberliegenden Seiten durch je zwei Nasen des anliegenden Befestigungsteils übergriffen ist.

Eine besonders hohe Sicherheit gegen Verdrehen ergibt sich, sofern die Backenteile der Klemmteile eine Sicherungsanordnung gegen gegenseitiges Verdrehen aufweisen, indem an den freien Enden der Backenteile Formteile ausgebildet sind, die bei geschlossener Schelle miteinander in formschlüssigen Eingriff gelangen.

Nachstehend ist die Erfindung anhand eines in der Zeichnung dargestellten Ausführungsbeispiels näher erläutert.
Es zeigen die
- Fig.1: eine Seitenansicht der an einen Träger festgelegten Schelle;
- Fig.2: eine Draufsicht auf die Schelle nach der Fig.1;
- Fig.3: eine Seitenansicht der Schelle nach der Fig.2.

Die Figuren zeigen eine sog. Baggerschelle mit verschieden ausgebildeten Klemmteilen aus Stahlblech, die so geformt sind, daß sie jeweils einen gewölbten Backenteil 21,21' und einen flachen, sich vom Backenteil 21,21' weg erstreckenden Befestigungsteil 23 aufweisen. Die im Grundriß quadratisch ausgebildeten flachen Befestigungsteile 23 weisen eine zentral gelegene Bohrung auf, die von einer Klemmschraube 25 durchgriffen ist, durch die die Befestigungsteile 23 gegeneinander spannbar sind und die außerdem in eine Gewindebohrung eines Trägers 27 eingreift, der eine Art Montageklotz für das Festlegen der Schelle bildet, an dem dieser mittels der Klemmschraube 25 befestigt ist.

Die mittels der Schelle zu verankernde Leitung (nicht gezeigt), die zwischen den gewölbten Backenteilen 21,21' der Klemmteile aufgenommen ist, erstreckt sich beim in den Figuren gezeigten Ausführungsbeispiel durch eine geteilte oder geschlitzte Muffe 26 aus einem elastomeren Werkstoff. Die Muffe 26 weist im Durchmesser vergrößerte seitliche Endränder auf, die die Seitenränder der Backenteile 21,21' übergreifen und die Muffe 26 gegen Axialverschiebung an diesen Backenteilen 21,21' sichern.

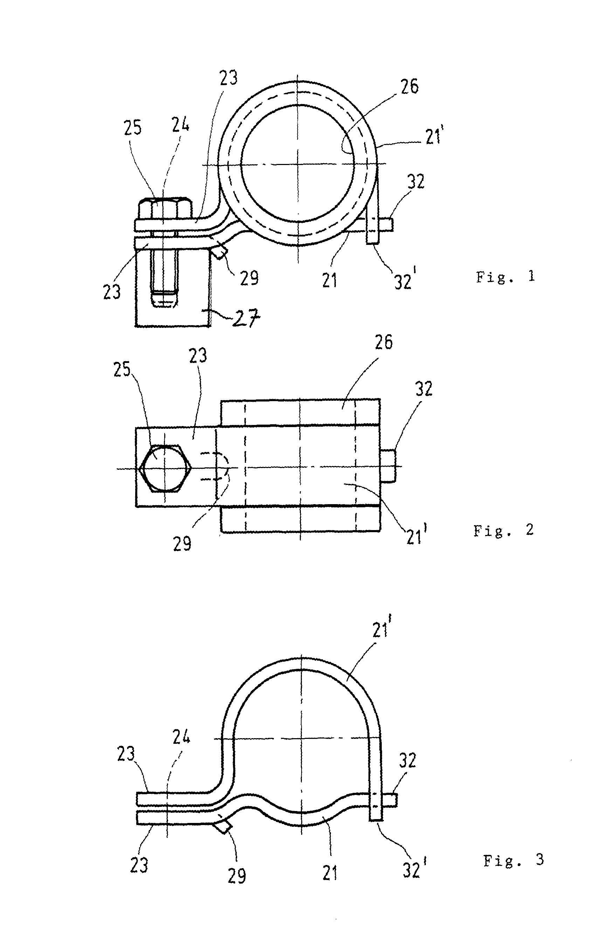

Lediglich das in Blickrichtung auf die Fig. 1 und 3 zuunterst angeordnete Klemmteil weist eine aus der Ebene seines Befestigungsteils 23 vorspringende ausgeprägte Nase 29 auf, die als Verdrehsicherung den Träger 27 in Form des Montageklotzes entlang einer seiner oberen Längsseiten übergreift. Neben dem Übergreifen des Trägers 27 mit der nach unten hin abgebogenen Nase 29 besteht aber auch die Möglichkeit, die dahingehende Nase 29 in eine nicht näher dargestellte Ausnehmung eines im Durchmesser erweiterten Trägers 27 einzusetzen, wobei die geometrischen Abmessungen der nicht näher dargestellten Vertiefung derart ausgelegt ist, daß die Nase 29 mit ihrem freien Ende jedenfalls nicht aufstoßen kann. Auch dergestalt wäre dann über einen formschlüssigen Eingriff das Befestigungsteil 23 auf der Oberseite des Trägers 27 festgelegt.

Die freien Enden der gewölbten Backenteile 21,21' sind durch eine zusätzliche Sicherungsanordnung gegen Verdrehen um die Achse 24 der Klemmschraube 25 gesichert. Diese Sicherungsanordnung ist durch eine Verlängerung 32 am freien Ende des Backenteils 21 des einen Klemmteils gebildet, die seitlich durch Verlängerungen 32' am anderen Backenteil 21' übergreifbar ist. Die Fig.3 zeigt die Schelle ohne die Klemmschraube 25 und ohne die zwischen den Backenteile 21 aufnehmbare Muffe 26 aus elastomerem Werkstoff. Als solcher kann ein vibrationsdämpfendes Material vorgesehen sein, beispielsweise ein synthetischer Kautschuk od. dgl..

Wie sich insbesondere aus der Fig.3 ergibt, ist das eine Backenteil 21' U-förmig ausgebildet und begrenzt dergestalt den Aufnahmeraum für die jeweils festzulegende Leitung. Das weitere zweite Backenteil 21 ist demgegenüber in der Art einer W-Struktur oder Wellenstruktur ausgebildet, wobei jedoch die Krümmungsradien von den beiden Backenteilen 21,21' im wesentlichen gleich sind, sofern die Anlagebereiche der Backenteile 21,21' mit der jeweils aufzunehmenden Leitung angesprochen sind. Neben der angesprochenen Verdrehsicherung über die Formteile 32,32' besteht auch die Möglichkeit, diese über eine nicht näher dargestellte Gelenk- oder Scharnierstelle zu ersetzen, so daß sich um dieses Gelenk bzw. Scharnier sich dann die Klemmteile für die Aufnahme bzw. die Freigabe von Leitungen auf- und zuklappen lassen.

## Patentansprüche

1. Schelle zur Befestigung von Schlauch- oder Rohrleitungen, mit zwei an einem Träger (27) festzulegenden Klemmteilen, von denen jedes einen gewölbten Backenteil (21,21'), der mit dem Umfang der zu befestigenden Leitung zusammenwirkt, und einen flachen, sich vom Backenteil (21,21') erstreckenden Befestigungsteil (23) aufweist, die zum Schließen der Schelle gegeneinander bewegbar sind, wobei die Backenteile (21,21') an ihrem einen freien Ende eine Sicherungsanordnung gegen gegenseitiges Verdrehen und/oder eine Gelenkstelle zum Öffnen und Schließen der Schelle aufweisen, **dadurch gekennzeichnet, daß** an zumindest einem Klemmteil zumindest eine aus der Ebene seines Befestigungsteils (23) vorspringende Nase (29) ausgebildet ist, die unter Bildung einer Verdrehsicherung den Träger (27) seitlich übergreift oder in eine hierfür vorgesehene Ausnehmung dieses Trägers (27) eingreift.

2. Schelle nach Anspruch 1, **dadurch gekennzeichnet, daß** zumindest eine vorspringende Nase (29) durch eine Verformung oder Ausprägung des betreffenden Befestigungsteiles (23) gebildet ist.

3. Schelle nach Anspruch 1 oder 2, **dadurch gekennzeichnet, daß** das Befestigungsteil (23) einen rechteckförmigen oder quadratischen Grundriß aufweist und daß die Befestigungsteile (23) durch eine im Zentralbereich angeordnete, beide Befestigungsteile (23) durchgreifende Klemmschraube (25) am Träger (27) sicherbar sind.

4. Schelle nach einem der Ansprüche 1 bis 3, **dadurch gekennzeichnet, daß** als Träger (27) der Schelle ein quaderförmiger Montageklotz vorgesehen ist, der an einer seiner Seiten durch die Nase (29) des anliegenden Befestigungsteils (23) des Backenteils (21) übergriffen ist oder ein Eingriff dieser Nase (29) an seiner gegenüberliegenden Oberseite zu der Unterseite dieses Befestigungsteils (23) erfolgt.

5. Schelle nach einem der Ansprüche 1 bis 4, **dadurch gekennzeichnet, daß** die Sicherungsanordnung gegen gegenseitiges Verdrehen der beiden Backenteile (21,21') durch Formteile (32,32') gebildet ist, die an den freien Enden der Backenteile (21,21') ausgebildet sind und einen formschlüssigen Eingriff miteinander ermöglichen.

6. Schelle nach einem der Ansprüche 1 bis 5, **dadurch gekennzeichnet, daß** am Befestigungsteil (23) nur eines der Klemmteile eine Nase (29) ausgeformt ist, die in dem dem Backenteil (21) benachbarten Bereich des Befestigungsteils (23) mittig angeordnet und für den Eingriff in eine im Träger (27) ausgebildete Vertiefung vorgesehen ist.

7. Schelle nach einem der Ansprüche 1 bis 6, **dadurch gekennzeichnet, daß** das eine Backenteil (21') U-förmig ausgebildet den Aufnahmeraum für die jeweils festzulegende Leitung begrenzt und daß das weitere zweite Backenteil (21) demgegenüber eine Art W-Struktur oder Wellenstruktur aufweist.

8. Schelle nach einem der Ansprüche 1 bis 7, **dadurch gekennzeichnet, daß** die Krümmungsradien von den beiden Backenteilen (21,21') im wesentlichen gleich sind, sofern die Anlagebereiche der Backenteile (21,21') mit der jeweils aufzunehmenden Leitung angesprochen sind.
